# EUROPÄISCHE PATENTSCHRIFT

(11) **EP 1 305 159 B1**
(45) Veröffentlichungstag und Bekanntmachung des Hinweises auf die Patenterteilung: **21.01.2004**
(21) Anmeldenummer: 01986638.3
(22) Anmeldetag: 12.10.2001
(51) Int. Cl.: B32B 5/02, B32B 5/16

(54) **LEICHTBAUELEMENTE UND VERFAHREN ZU DEREN HERSTELLUNG**
LIGHTWEIGHT CONSTRUCTION ELEMENTS AND METHOD FOR THE PRODUCTION THEREOF
ELEMENTS DE CONSTRUCTION LEGERS ET LEUR PROCEDE DE PRODUCTION

(30) Priorität: 12.10.2000 DE 10050624; 13.01.2001 DE 10101429
(43) Veröffentlichungstag der Anmeldung: 02.05.2003
(73) Patentinhaber: Wirtz, Markus, 40883 Ratingen (DE); Wirtz, Christian, 40474 Düsseldorf (DE)
(72) Erfinder: Wirtz, Markus, 40883 Ratingen (DE); Wirtz, Christian, 40474 Düsseldorf (DE)
(74) Vertreter: COHAUSZ & FLORACK
(86) Internationale Anmeldenummer: PCT/EP2001/011828
(87) Internationale Veröffentlichungsnummer: WO 2002/030662

(56) Entgegenhaltungen:
- EP-A- 0 692 563
- DE-A- 4 404 930
- US-A- 5 267 519

## Beschreibung

Die Erfindung betrifft Leichtbauelemente aus einem Mehrwandgewebe, befüllt mit einem geblähten thermoplastischen polymeren Material und ein Verfahren zu deren Herstellung.

Es ist bekannt, Zweiwandgewebe im Baubereich als Schalung für Betoneinfüllungen zu verwenden. Wandelemente werden zumeist durch das Verfüllen von Zweiwandgeweben mit Beton hergestellt, so daß das Zweiwandgewebe als Schalung dient. Im Hochbau werden Textilgewebe bis heute in geringem Maße verwendet, meist in der Oberflächengestaltung. Mit PVC beschichtete Zweiwandgewebe werden für pneumatische Zwecke eingesetzt, beispielsweise als Zelte oder als Kissen zur Unterstützung technischer Arbeiten. Bekannt sind beschichtete Zweiwandgewebe im Lüftungsbereich und mit Sand gefüllt im Schallschutz.

Derartige Zweiwandgewebe-Produkte weisen wesentliche Nachteile auf. Für hohe Gebäude, für erdbebengefährdete Hochbauten, für die Luft- und Raumfahrt sowie den Einsatz im Bau mit Fertigbauelementen benötigt man tragende, jedoch leichte Bauplatten. Die gegenwärtigen Produkte sind entweder sehr schwer (Betonfüllung) oder genügen statischen Anforderungen nicht (Luftfüllungen). Die heutige Leichtbautechnik hat den Nachteil, daß sie zwar feuerfeste und verbindungssteife Produkte herstellen kann, jedoch im Regelfall als Maß- oder Einzelanfertigungen mit hohen Material- und Produktionskosten, so daß ein Einsatz im zivilen Baubereich zumeist nicht in Betracht kommt.

Es ist ferner bekannt, untereinander verbundene gitterartige Textilmatten, Gewirke oder Raschelware, insbesondere Doppelraschelware als Armierung in Bauteile einzulegen. Damit wird das aus der Stahlarmierung bekannte Prinzip auf textile Armierungen übertragen. Hierbei werden der Zwischenraum zwischen zwei miteinander verbundenen, gitterartigen textilen Matten und die Gitterzwischenräume der Matten mit Füllstoffen, insbesondere Beton, verfüllt. Auf diese Weise umhüllt der Beton oder das sonstige armierte Material das textile Gebilde, das als innenliegende Armierung dient.

Derartige Produkte weisen erhebliche Nachteile auf. Zunächst werden für die Herstellung Formen oder sonstige Vorrichtungen benötigt, die das lose Gewirke, die Matten oder die Raschelware für das Verfüllen stützen bzw. fixieren. Ferner muß das Füllmaterial Druckbelastungen aufnehmen, da die textilen Materialien innenliegend und nicht vorgespannt sind. Das mit losen, nicht vorgespannten Matten, Gewirken oder Raschelgeweben armierte Material muß sich außerdem selbst tragen. Derartige Armierungen verhindern schließlich das Abscheren der Bauteile nur in unzureichendem Maße. Als Füllstoffe kommen daher regelmäßig nur Materialien mit hohen Raumdichten und relativ hohem Gewicht, wie Beton oder schwere Schaumkunststoffe in Betracht. Innenliegende textile Armierungen sind darüber hinaus nicht oder nur sehr eingeschränkt für die Konfektionierung geeignet; ein Vernähen, Verkleben oder Verschweißen der Bauplatten an den textilen Einlagen oder Matten ist nicht oder nur schwierig möglich, da es sich wie beschrieben um innenliegende Armierungen handelt.

Aus der DE 41 41 113 A1 ist ein Frontteil für den Innenraum von Kraftfahrzeugen aus einem Abstandsgewirke, einer auf das Abstandsgewirke kaschierten Folie und einer auf die Folie aufgebrachten Schicht aufgeschäumter Schaumperlen bekannt. Die andere Seite des Abstandsgewirkes kann mit einer Dekorschicht versehen sein. Der Innenraum des Abstandsgewirkes selbst ist nicht verfüllt.

Der Erfindung liegt die Aufgabe zugrunde, Leichtbauelemente, insbesondere Platten und andersartige Formkörper, bereitzustellen, die einerseits leicht, andererseits aber stabil und auch als selbsttragende Wände und Decken, Träger, Dächer und Gauben sowie als Formkörper für den Einsatz in Kraftfahrzeugen, Schiffen und Luftfahrzeugen geeignet sind. Gleichzeitig sollen die verwendeten Materialien und das Produktionsverfahren niedrige Produktkosten sicherstellen, um eine Nutzung der Leichtbauelemente im zivilen Baubereich zu ermöglichen.

Gelöst wird diese Aufgabe durch ein Leichtbauelement, umfassend ein textiles Mehrwandgewebe und mindestens ein teilchenförmiges geblähtes, thermoplastisches polymeres Material, wobei das geblähte Material zwischen den Wänden des Mehrwandgewebes die textilen Verbindungsfäden desselben straffend angeordnet ist und die Teilchen des geblähten Materials zumindest teilweise untereinander verbunden sind.

Die erfindungsgemäßen Bauelemente oder die Bauplatten liefern eine hohe Stabilität bei niedrigem Gewicht und sind darüber hinaus formbar. Je nach Dicke des Mehrwandgewebes können die erfindungsgemäßen Leichtbauelemente Wandstärken von wenigen Millimetern bis zu einem Meter und mehr aufweisen.

Die ausgezeichnete Formstabilität der erfindungsgemäßen Leichtbauelemente ist vor allem auf deren Befüllung mit untereinander zumindest teilweise vernetzten Teilchen aus geblähtem, thermoplastischem polymerem Material zurückzuführen. In besonders vorteilhafter Ausgestaltung der Erfindung sind die geblähten Teilchen nicht nur untereinander, sondern zumindest teilweise auch mit den Wänden des Mehrwandgewebes und/oder den textilen Verbindungsfäden (Abstandsfäden) verklebt und/oder vernetzt, was dem System weitere Stabilität verleiht. Durch das Befüllen mit geblähtem Material werden auch die Gewebeaußenflächen gestrafft. Durch die hohe Eigenstabilität des Polymer/Gewebe-Systems kann bei dem erfindungsgemäßen Bauelement auf eine Armierung durch Einlegen von Textilmatten, Gewirken oder Raschelware verzichtet werden, was zu einer enormen Gewichtsersparnis gegenüber herkömmlichen Bauelementen führt und die Herstellung und Konfektionierung vereinfacht.

Ein weiterer Vorteil der erfindungsgemäßen Leichtbauelemente ist ferner, daß die Stabilität der Bauplatten je nach Einsatzgebiet variabel angepaßt werden kann. Die variablen Parameter liegen insbesondere in der Veränderung der Gewebestruktur, der Art der Abstandsfasern, der Anordnung und Anzahl der Abstandsfäden, der Dicke der Bauplatten und der Dichte des Füllstoffes. Durch diese Variabilität ist ein Einsatz der Bauplatten in verschiedenen Gebieten möglich. Beispiele für sinnvolle Einsatzgebiete der erfindungsgemäßen Leichtbauelemente sind:
- Hallen-, Container- und Garagenbau: Im Hallenbau können die erfzndungsgemäßen Leichtbauplatten sämtliche heute genutzten Materialien für Wand- und Dachkonstruktionen substituieren. Analog gilt dieses auch für den Container- und Garagenbau, da hier die statischen Anforderungen eher geringer ausfallen.
- Haus- und Wohnungsbau: Im Haus-und Wohnungsbau sind zunächst heutiges Ständerbauwerk sowie Innen- und Außensteinwände zu ersetzen. Ferner liegt ein breites Einsatzgebiet in der Herstellung von Fertigdecken und - wänden, Dachgauben sowie Balkonen.
- Hochbau: Für den Hochbau können mit den erfindungsgemäßen Bauplatten zunächst günstige Zwischenwände produziert werden, die das Gewicht der Bauwerke signifikant reduzieren. Ebenso ist möglich, durch den Einsatz von hochtechnologischen Fasern tragende Wände und Decken mit den erfindungsgemäßen Bauplatten zu konstruieren.
- Brückenbau: Durch die Nutzung hochtechnologischer Fasern und Füllstoffe ist ein Einsatz der erfindungsgemäßen Leichtbauplatten als tragende Brückenelemente ebenfalls denkbar. Auch hier sind die erheblichen Gewichtseinsparungen ein wichtiges Argument für den Einsatz der Leichtbauelemente.
- Luftfahrtbereich: Insbesondere durch die bereits beschriebenen Gewichtseinsparungen bei gleichzeitig hoher Stabilität sind die erfindungsgemäßen Leichtbauelemente geradezu ideal für den Einsatz im Luftfahrtbereich. Die weiter unten beschriebene beispielsweise Anreicherung der Polysterol-Kügelchen (Füllstoff) mit Helium oder anderen Edelgasen erhöht die positiven Eigenschaften der Leichtbauelemente zusätzlich.
- Schiffsbau: Auch im Schiffsbau werden leichte aber dennoch stabile Bauplatten benötigt.

Das Mehrwandgewebe kann ein Zweiwandgewebe, ein Gewebe aus drei Wandschichten mit jeweils einem Hohlraum zwischen zwei Schichten oder ein Mehrwandgewebe mit einer nach Verwendungszweck zu bestimmenden Vielzahl von Wandschichten sein. Besonders bevorzugt ist jedoch ein Zweiwandgewebe. Die erfindungsgemäß einzusetzenden Mehrwandgewebe weisen im Falle der Zweiwandgewebe zwei voneinander beabstandete Gewebe auf. Die beiden voneinander beabstandeten Gewebe bilden die ggf. weiter zu behandelnden Außenflächen der Leichtbauelemente und sind durch Fäden (Abstandsfäden) miteinander verbunden. Diese verbindenden Fäden können mit den beiden Geweben verwoben sein. Es versteht sich, daß die Abstandsfäden nicht nur als einzelne Fäden, sondern in beliebiger Form, beispielsweise gebündelt oder in Form von abstandshaltenden Stegen, ausgebildet sein können. Der Abstand zwischen den beiden flächigen Geweben des Zweiwandgewebes kann einige Millimeter bis zu einem Meter und mehr betragen.

Die Gewebe und die die flächigen Gewebe verbindenden Fäden können aus Naturfasern oder synthetischen Fasern wie Polymerfasern, Glasfasern, Kohlenstoffasern, Keramikfasern, Borfasern, Hohlfasern, metallische Fasern und sowie Mischprodukten erzeugt sein. Die Polymerfasern können flammwidrig ausgerüstet sein. Die flammwidrige Ausrüstung kann erfolgen durch Zusatz eines Flammschutzmittels zu der Masse, aus der die Fasern erzeugt werden.

Vorteilhaft ist ferner, die erfindungsgemäßen Leichtbauelemente an den außenliegenden Gewebeflächen direkt zu vernähen, zu verkleben oder zu verschweißen.

Zweiwandgewebe sind im Handel erhältlich und werden beispielsweise durch die GIRMES IN-Tex GmbH & Co. KG unter der Bezeichnung GIRMES-Zweiwandgewebe angeboten.

Zum Zwecke der Befüllung der Mehrwandgewebe können alle blähbaren, thermoplastischen Materialien eingesetzt werden. Besonders bevorzugt sind durch Wärme blähbare polymere Materialien. Das durch Wärme expandierbare thermoplastische Material ist vorzugsweise ein Polymer auf der Basis von Polystyrolen, Polyolefinen, Vinylpolymeren, Polyamiden, Polyestern, Polyacetalen, Polycarbonaten, Polyurethanen und Ionomeren sowie deren Gemischen. Vorzugsweise werden flammwidrig ausgerüstete blähbare, thermoplastische Materialien eingesetzt.

Erfindungsgemäß einzusetzende blähbare Materialien sind beispielsweise auch solche, die bereits vorgebläht sind und nach Verfüllen in das Abstandsgewirke durch eine weitere thermische Behandlung auf die endgültige Größe gebläht werden.

Ein erfindungsgemäß besonders bevorzugtes blähbares Material sind die beispielsweise unter der Marke Styropor® angebotenen blähbaren Polystyrole und Polystyrolabkömmlinge, insbesondere flammwidrig ausgerüstete Polymere dieser Art wie Styropor®-F.

Die Menge des einzusetzenden blähbaren Materials ist abhängig vom Volumen des Raums zwischen den Wänden des Mehrwandgewebes und vom Volumen des endgültig geblähten Materials.

Vorzugsweise weisen die erfindungsgemäß eingesetzten geblähten Teilchen eine Dichte von 0,015 bis 0,050 g/cm³ auf.

Vorzugsweise handelt es sich bei den erfindungsgemäß eingesetzten geblähten Teilchen um kugelförmige Teilchen. Auf diese Weise kann eine optimale Ausnutzung des Raumes zwischen den Wänden des Mehrwandgewebes erreicht werden. In besonders bevorzugter Ausgestaltung der Erfindung weisen die geblähten Teilchen eine mittlere Teilchengröße von 0,005 bis 10 cm, insbesondere 0,1 bis 5 cm, auf.

Die erfindungsgemäßen Bauplatten und Bauelemente erhalten ihre hohe Festigkeit durch das Zusammenwirken der vorgespannten Gewebeflächen und die einen kompakten Körper bildenden zahlreichen geblähten Teilchen im Innenraum zwischen den Gewebeaußenflächen. Diese sind zumindest teilweise miteinander sowie gegebenenfalls mit den Verbindungsfäden und mit den gewebten Wandflächen des Mehrwandgewebes fest verbunden. Insbesondere sind die zuvor genannten Bestandteile durch Wärmeeinwirkung miteinander vernetzt oder verschweißt.

Gegenstand der Erfindung ist demgemäß auch ein Verfahren zur Herstellung der erfindungsgemäßen Leichtbauelemente, welches mindestens folgende Schritte aufweist:
- Einbringen eines teilchenförmigen, zumindest teilweise geblähten thermoplastischen Materials zwischen die Wände eines Mehrwandgewebes und
- Vernetzen der Teilchen untereinander und/oder mit den textilen Verbindungsfäden und/oder mit den Wänden des Mehrwandgewebes durch Einwirkung von Wärme unter Straffung der textilen Verbindungsfäden des Mehrwandgewebes.

Das erfindungsgemäße Herstellungsverfahren ist einfach und kostengünstig und ohne großen apparativen Aufwand durchführbar.

Das Vernetzen der Teilchen erfolgt vorzugsweise durch Heißdampf.

Die Herstellung der erfindungsgemäßen Formkörper und Leichtbauelemente kann beispielsweise derart erfolgen, daß zunächst an einer offenen Längsseite eines Mehrwandgewebes ein Profil eingesetzt und das Profil mit dem Mehrwandgewebe verbunden wird. Die Verbindung kann beispielsweise durch Einnähen oder Verkleben erfolgen. Es ist auch möglich, das Profil allein durch Spannung an der Längsseite im Mehrwandgewebe kraftschlüssig mit dem Gewebe einzusetzen.

Gemäß einer bevorzugten Ausführungsform des erfindungsgemäßen Herstellungsverfahrens werden die Gewebeflächen des Mehrwandgewebes vor dem Einbringen der Teilchen und/oder während des Vernetzens gespannt. Das Spannen kann beispielsweise durch mechanisches Greifen und auseinanderziehen der beiden Gewebeflächen eines Mehrwandgewebes erfolgen. Das Mehrwandgewebe liegt dann als Hohlkörper vor, der an einer Längsseite geschlossen ist.

In einem weiteren Schritt wird das Innere des Mehrwandgewebes mit einem blähbaren Material befüllt. Das Befüllen des Hohlkörpers im Mehrwandgewebe kann beispielsweise dadurch erfolgen, daß Lanzetten seitlich durch die offene Längsseite des Mehrwandgewebes in den Hohlkörper hineinfahren und beispielsweise vorgeschäumte EPS(expandiertes Polystyrol)-Kügelchen in den Hohlkörper blasen. Bei Mehrwandgeweben mit mehr als zwei Wandschichten, z.B. bei Dreiwandgeweben, können die Hohlräume zwischen jeweils zwei Wandschichten mit verschiedenen blähbaren Materialien oder unterschiedlichen Stoffzusammensetzungen befüllt werden.

Nach dem Befüllen des Mehrwandgewebes kann ein zweites Profil als zweite Abschlußkante in die noch offene Längsseite wie zuvor beschrieben eingebracht werden.

Anschließend werden die geblähten Teilchen (z.B. EPS-Kügelchen) in einem weiteren Arbeitsschritt beispielsweise durch Heißdampf verschweißt. Hierbei blähen sich die Kügelchen auf, füllen die Leerräume und Zwickel in der Füllung aus, pressen sich fest an die textilen Wandungen und verkleben untereinander mit den textilen Wandungen und den Verbindungsfäden zwischen den Gewebeflächen des Mehrwandgewebes.

Anschließend folgt eine Abkühlphase zum Durchhärten der Leichtbauelemente.

Nach der Abkühlphase können die Endlosplatten oder Langplatten durch Zerschneiden, Zersägen und Vernähen der Schnittkanten nach Verwendungszweck oder Kundenwunsch konfektioniert werden.

Es ist auch möglich, einzelne Leichtbauelemente in der Weise herzustellen, daß an drei der vier offenen Schmalseiten eines vorgespannten Mehrwandgewebes wie vorstehend beschrieben Profile eingesetzt werden, und der Innenraum des Mehrwandgewebes sodann durch die noch offene Schmalseite des Mehrwandgewebes mit einem blähbaren Material befüllt wird. Nach dem Befüllen des Mehrwandgewebes wird ein viertes Profil als Abschlußkante in die noch offene Schmalseite eingebracht und das Leichtbauelement wie zuvor beschrieben weiterbehandelt.

Die Herstellung kann auf einem Fließband erfolgen. In diesem Falle würden sich die Lanzetten, die die blähbaren Materialien in den Hohlkörper blasen, mit der Geschwindigkeit des Fließbands bewegen.

Die Behandlung mit Heißdampf kann beispielsweise dadurch erfolgen, daß die vorgespannte, gefüllte und vernähte Mehrwandgewebebahn einen Siebteil des Produktionsbands durchläuft, innerhalb dessen heißer Wasserdampf durch das Sieb zugeführt wird und auf der anderen Seite des befüllten Mehrwandgewebes ein Unterdruck angelegt wird, der den heißen Wasserdampf ansaugt und zu dessen Penetration in den gefüllten Raum des Gewebes veranlaßt.

Es kann vorteilhaft sein, nach dem Hineindiffundieren der Luft in einem Vakuumverfahren die Luft wieder zu entziehen und die verschweißten EPS-Kügelchen mit Helium oder einem anderen Gas zu füllen. Dabei kann ein bestimmter Materialinnendruck eingestellt werden. Die Außenflächen können, beispielsweise durch ein Epoxidharz, versiegelt werden. Auf diese Weise kann ein individuell regulierbarer Innendruck in der Platte erzeugt werden. Auf diese Weise kann beispielsweise für die Verwendung des Formkörpers oder Leichtbauelements in der Luftfahrttechnik eine besondere Stabilität erreicht werden, da mit steigender Flughöhe die Luftdichte abnimmt. Die im Vergleich zur Luft geringere Wärmeleitfähigkeit eines Edelgases wie Helium ermöglicht auch einen nutzenbringenden Einsatz derart modifizierter Leichtbauplatten in der Isolier- und Kühltechnik.

Es kann ferner vorteilhaft sein, die Gewebeaußenflächen mit (ggf. vorgespannten) Kohlenstoffasern auszurüsten. Hierdurch kann zur Verwendung der Leichtbauelemente beispielsweise als Decken, Brückenelemente etc. eine höhere Druck-, Bruch- und Reißfestigkeit erreicht werden.

Gemäß einer weiteren vorteilhaften Ausbildung der Erfindung wird vorgeschlagen, in das Mehrwandgewebe einseitig oder beidseitig für den Lichttransport geeignete Glasfasern, ein Glasfasernetz oder eine glasfaserhaltige Vorrichtung einzuweben oder aufzubringen. Durch das Einweben oder Einbringen einer lichtaufnehmenden und lichttransportierenden Glasfaser, eines Glasfasernetzes oder einer glasfaserhaltigen Vorrichtung auf einer Gewebeseite der Leichtbauplatte und Verbindung dieser Glasfaser mit einer lichtabstrahlenden Glasfaser, einem Glasfasernetz oder Glasfasergewebe auf der Gegenseite der Leichtbauplatte kann ein Lichttransport von der einen Seite zur anderen Seite der Leichtbauplatte erreicht werden.

Um das auf der oberen Seite auffallende Licht optimal zu nutzen, kann es vorteilhaft sein, die Außenseite der oberen Gewebefläche mit einer Folie aus Acryl- oder Plexiglas zu beschichten. Hierdurch werden sowohl vertikale als auch horizontale Lichtwellen verteilt und können durch die lichtleitenden Glasfasern aufgenommen werden. Eine Bündelung der Lichtwellen kann darüber hinaus etwa dadurch erzielt werden, daß die auf die Außenseite aufgetragene Folie aus einer Vielzahl kleiner linsenartiger Felder besteht. Diese Felder bündeln durch ihre Krümmung das Licht und übertragen es punktgenau an die lichtleitenden Glasfasern, die beispielsweise mit der Folie verschweißt sein können. Um auf der Unterseite das Licht wiederum abzustrahlen, werden die lichttransportierenden Glasfaser-Abstandsfaden auf der Unterseite angeschliffen bzw durch einen Laser "aufgeschmolzen". Bei einer Verwendung derartiger Leichtbauplatten als Decken- und Wandelemente können diese nicht nur die tragende Struktur darstellen und isolierend wirken, sondern auch der Raumbeleuchtung dienen.

Die erfindungsgemäßen Leichtbauplatten können als Träger für alle möglichen Materialien dienen. Sie können beispielsweise mit CIS-Solarzellen beschichtet sein. Durch diese aus einer Kupfer-Indium-Diselenid-Verbindung (CuInSe₂) entstandene Technologie, kann Licht in Strom umgewandelt werden. Auf diese Weise wird durch Verwendung der CIS-Technologie auf der Leichtbauplattenoberfläche Strom aus Solarzellenfolien erzeugt.

Eine zweckmäßige Ausgestaltung der Erfindung kann auch darin liegen, in Ergänzung zu der vorstehend beschriebenen Beschichtung einer Seite der Leichtbauplatte mit CIS-Solarzellen auf der gegenüber liegenden Seite der Leichtbauplatte Akkuflächen, beispielsweise Silicium-Polymer-Akkus in einem Gitter aufzudampfen, einzuweben oder sonstwie aufzubringen und durch ein elektrisch leitfähiges Material mit den CIS-Solarzellen auf der gegenüber liegenden Plattenseite zu verbinden. Auf diese Weise kann der durch Lichteinfall in den CIS-Solarzellen produzierte Strom auf der gegenüber liegenden Plattenseite im Akkumulator oder Akkumulatorgitter gespeichert werden.

Eine ebenfalls zweckmäßige Ausgestaltung der Erfindung kann darin bestehen, die beschriebenen Ausgestaltungsformen des Lichttransports und der Solarstromerzeugung zu kombinieren. Hierzu kann beispielsweise auf der Außenfläche einer Gewebeseite eine Folie aufgetragen werden (ggf. eine Folie aus Acryl- oder Plexiglas), die wie oben beschrieben vorzugsweise aus einer Vielzahl kleiner linsenartiger Felder besteht. Auf der zur Leichtbauplatte gerichteten Seite der Folie wird eine Art Sieb bzw. Gitter der CIS-Solarzellen derart aufgetragen, daß das einfallende Licht an einigen Stellen auf die CIS-Solarzellen und an anderen Stellen direkt auf die Bauplatte trifft. An den Stellen, an denen zwischen Folie und Bauplatte keine CIS-Solarzellen aufgetragen wurden, wird die Folie direkt mit den in der Bauplatte enthaltenen Glasfaser-Abstandsfäden verschweißt. Hierdurch wird ein Lichttransport von der Ober- auf die Unterseite der Bauplatte erreicht. An den Stellen zwischen Folie und Bauplatte, an denen die CIS-Solarzellen aufgetragen wurden, kann parallel Strom erzeugt werden.

Schließlich können die erfindungsgemäßen Leichtbauplatten zu Bauteilen oder Bauelementen, auch dreidimensionaler Natur, weiterverarbeitet werden.

Eine weitere Ausbildung der Erfindung sieht vor, die Leichtbauplatten und/oder die nach Vernähen erhaltenen Bauteile mit dünnen keramischen Materialien, metallischen Materialien, Kunststoffen oder sonstigen Materialien zu beschichten oder zu laminieren. Die Beschichtung kann beispielsweise durch PVC (Polyvinylchlorid) erfolgen.

## Patentansprüche

1. Leichtbauelement, umfassend ein textiles Mehrwandgewebe und mindestens ein teilchenförmiges geblähtes, thermoplastisches polymeres Material, wobei das geblähte Material zwischen den Wänden des Mehrwandgewebes die textilen Verbindungsfäden desselben straffend angeordnet ist und die Teilchen des geblähten Materials zumindest teilweise untereinander verbunden sind..

2. Leichtbauelement nach Anspruch 1, **dadurch gekennzeichnet, daß** die einzelnen geblähten Teilchen untereinander und/oder mit den Wänden des Mehrwandgewebes und/oder mit den textilen Verbindungsfäden durch Verkleben und/oder thermisches Verschmelzen verbunden sind.

3. Leichtbauelement nach Anspruch 1 oder 2, **dadurch gekennzeichnet, daß** das geblähte polymere Material ein Polystyrol, Polyolefin, Vinylpolymer, Polyamid, Polyester, Polyacetal, Polycarbonat, Polyurethan, Ionomerharz oder ein Gemisch derselben ist.

4. Leichtbauelement einem der Ansprüche 1 bis 3, **dadurch gekennzeichnet, daß** die Teilchen des geblähten thermoplastischen polymeren Materials kugelförmig sind.

5. Leichtbauelement nach einem der Ansprüche 1 bis 4, **dadurch gekennzeichnet, daß** die Teilchen des geblähten thermoplastischen polymeren Materials eine mittlere Größe von 0,005 bis 10 cm, insbesondere von 0,1 bis 1 cm, aufweisen.

6. Leichtbauelement nach einem der Ansprüche 1 bis 5, **dadurch gekennzeichnet, daß** das Mehrwandgewebe ein Zweiwandgewebe ist.

7. Leichtbauelement nach einem der Ansprüche 1 bis 6, **dadurch gekennzeichnet, daß** das Element ein- oder beidseitig beschichtbar ausgerüstet ist.

8. Leichtbauelement nach einem der Ansprüche 1 bis 7, **dadurch gekennzeichnet, daß** es für den Lichttransport geeignete Glasfasern enthält.

9. Leichtbauelement nach Anspruch 8, **dadurch gekennzeichnet, daß** die Glasfasern auf mindestens einer Seite des Elements eingewebt und/oder aufgebracht sind.

10. Leichtbauelement nach einem der Ansprüche 1 bis 9, **dadurch gekennzeichnet, daß** es mindestens einseitig mit Solarzellen, insbesondere mit CIS-Solarzellen, beschichtet ist.

11. Leichtbauelement nach Anspruch 9 oder 10, **dadurch gekennzeichnet, daß** ein Gitter aus CIS-Solarzellen vorgesehen ist und in mindestens einen Zwischenraum des Gitters für den Lichttransport geeignete Glasfasern eingebrachz sind.

12. Leichtbauelement nach einem der Ansprüche 1 bis 11, **dadurch gekennzeichnet, daß** auf mindestens einer Seite des Elements ein Akkumulator, insbesondere ein Silicium-Polymer-Akkumulator, aufgebracht und/oder eingewebt ist.

13. Leichtbauelement nach einem der Ansprüche 10 bis 12, **dadurch gekennzeichnet, daß** die Solarzellen und/oder der Akkumulator in Form eines Gitters oder einer Gitterfolie vorliegen.

14. Leichtbauelement nach einem der Ansprüche 10 bis 13, **dadurch gekennzeichnet, daß** es auf einer Seite Solarzellen und auf der gegenüberliegenden Seite einen Akkumulator aufweist und beide Seiten miteinander durch ein den elektrischen Strom leitendes Material miteinander verbunden sind.

15. Leichtbauelement nach einem der Ansprüche 1 bis 14, **dadurch gekennzeichnet, daß** das Element mit einem Harz versiegelt ist.

16. Leichtbauelement nach einem der Ansprüche 1 bis 15, **dadurch gekennzeichnet, daß** das Element mit einem PVC-Harz oder Epoxidharz versiegelt ist.

17. Leichtbauelement nach einem der Ansprüche 1 bis 16, **dadurch gekennzeichnet, daß** das Element ein- oder beidseitig mit dünnen keramischen, metallischen oder polymeren Materialien beschichtet oder laminiert ist.

18. Leichtbauelement nach einem der Ansprüche 1 bis 17, **dadurch gekennzeichnet, daß** das textile Mehrwandgewebe und/oder die textilen Verbindungsfäden Naturfasern oder synthetische Fasern wie Polymerfasern, Glasfasern, Kohlenstoffasern, Keramikfasern, Borfasern, Hohlfasern und/oder metallische Fasern enthalten.

19. Leichtbauelement nach einem der Ansprüche 1 bis 18, **dadurch gekennzeichnet, daß** das Element die Form einer Platte aufweist.

20. Verfahren zur Herstellung eines Leichtbauelements nach einem der Ansprüche 1 bis 19, **gekennzeichnet durch**
- Einbringen eines teilchenförmigen, zumindest teilweise geblähten thermoplastischen Materials zwischen die Wände eines Mehrwandgewebes und
- Vernetzen der Teilchen untereinander und/oder mit den textilen Verbindungsfäden und/oder mit den Wänden des Mehrwandgewebes **durch** Einwirkung von Wärme unter Straffung der textilen Verbindungsfäden des Mehrwandgewebes.

21. Verfahren nach Anspruch 20, **dadurch gekennzeichnet, daß** die Gewebeflächen des Mehrwandgewebes vor dem Einbringen der Teilchen und/oder während des Vernetzens gespannt werden.

22. Verfahren nach Anspruch 20 oder 21, **dadurch gekennzeichnet, daß** das Vernetzen durch Heißdampf erfolgt.

23. Verfahren nach einem der Ansprüche 20 bis 22, **dadurch gekennzeichnet, daß** das Leichtbauelement nach der Herstellung durch Zerschneiden, Zersägen und/oder vernähen der Schnittkanten konfektioniert wird.

## Claims

1. Lightweight construction element, comprising a multi-wall textile fabric and at least a particle shaped blown thermoplastic polymer material, wherein the blown material is arranged between the walls of the multi-wall fabric while stretching the textile binding threads thereof, and the particles of the blown material are at least partially bonded with each other.

2. Lightweight construction element according to Claim 1, **characterized in that** the individual particles of the blown material are bonded with each other and/or with the walls of the multi-wall textile fabric and/or with the textile binding threads, as a result of adhesion and/or thermal melting.

3. Lightweight construction element according to Claims 1 or 2, **characterized in that** the blown polymer material comprises polystyrene, polyolefine, vinyl polymer, polyamide, polyester, polyacetal, polycarbonate, polyurethane, ionomer resin, or a mixture of the above.

4. Lightweight construction element according to one of Claims 1 to 3, **characterized in that** the particles of the blown thermoplastic polymer material are spherical.

5. Lightweight construction element according to one of Claims 1 to 4, **characterized in that** the particles of the blown thermoplastic polymer material feature average dimensions from 0.005 to 10 cm, and in particular from 0.1 to 1 cm.

6. Lightweight construction element according to one of Claims 1 to 5, **characterized in that** the multi-wall fabric is a double-walled fabric .

7. Lightweight construction element according to one of Claims 1 to 6, **characterized in that** the element is arranged so it can be coated on one or both sides.

8. Lightweight construction element according to one of Claims 1 to 7, **characterized in that** it contains glass fibers suitable for the transmission of light.

9. Lightweight construction element according to Claim 8, **characterized in that** the glass fibers are woven into and/or deposited onto at least one side of the element.

10. Lightweight construction element according to one of Claims 1 to 9, **characterized in that** it is coated on at least one side with solar cells, in particular with CIS solar cells.

11. Lightweight construction element according to Claims 9 or 10, **characterized in that** a lattice of CIS solar cells is provided, and that glass fibers suitable for light transmission are inserted in at least one space in the lattice.

12. Lightweight construction element according to one of Claims 1 to 11, **characterized in that** an accumulator, in particular a silicon polymer accumulator, is deposited onto and/or woven into at least one side of the element.

13. Lightweight construction element according to one of Claims 10 to 12, **characterized in that** the solar cells and/or the accumulator are present in the form of a lattice or lattice foil.

14. Lightweight construction element according to one of Claims 10 to 13, **characterized in that** it is provided on one side with solar cells, and with an accumulator on the opposite side, and that both sides are connected together with a material which conducts electric current.

15. Lightweight construction element according to one of Claims 1 to 14, **characterized in that** the element is sealed with a resin material.

16. Lightweight construction element according to one of Claims 1 to 15, **characterized in that** the element is sealed with a PVC resin or epoxy resin material.

17. Lightweight construction element according to one of Claims 1 to 16, **characterized in that** the element is coated with, or laminated with, thin ceramic, metallic or polymer material, on one or both sides.

18. Lightweight construction element according to one of Claims 1 to 17, **characterized in that** the multi-wall textile fabric and/or the textile binding threads contain natural fibers or synthetic fibers such as polymer fibers, glass fibers, carbon fibers, ceramic fibers, boron fibers, hollow fibers and/or metallic fibers.

19. Lightweight construction element according to one of Claims 1 to 18, **characterized in that** the element is in the form of a plate.

20. Method for the production of a lightweight construction element according to one of Claims 1 to 19, **characterized by**
- the application of a particle shaped thermoplastic material, which is at least partially blown, between the walls of a multi-walled fabric, and
- the cross-linking of the particles with each other and/or with the textile binding threads and/or with the walls of the multi-walled fabric by the effect of heat, while stretching the textile binding threads of the multi-walled fabric.

21. Method according to Claim 20, **characterized in that** the fabric surfaces are stretched before the application of the particles and/or during the cross-linking process.

22. Method according to Claims 20 or 21, **characterized in that** the cross-linking is implemented with superheated steam.

23. Method according to one of Claims 20 to 22, **characterized in that** the lightweight construction element is customized after manufacture by cutting, sawing and/or sewing the cut edges.

## Revendications

1. Elément de construction léger qui comprend un tissu textile à plusieurs parois et au moins un matériau polymère thermoplastique en particules expansées, le matériau expansé étant disposé entre les parois du tissu à plusieurs parois et tendant les fils textiles de liaison de ce dernier, les particules de matériau expansé étant reliées au moins en partie les unes aux autres.

2. Elément de construction léger selon la revendication 1, **caractérisé en ce que** les particules individuelles expansées sont reliées les unes aux autres et/ou aux parois du tissu à plusieurs parois et/ou aux fils de liaison textile par collage et/ou soudage thermique.

3. Elément de construction léger selon la revendication 1 ou 2, **caractérisé en ce que** le matériau polymère expansé est un polystyrène, une polyoléfine, un polymère de vinyle, un polyamide, un polyester, un polyacétal, un polycarbonate, un polyuréthane, une résine ionomère ou un mélange de ces matériaux.

4. Elément de construction léger selon l'une des revendications 1 à 3, **caractérisé en ce que** les particules du matériau polymère thermoplastique expansé sont de forme sphérique.

5. Elément de construction léger selon l'une des revendications 1 à 4, **caractérisé en ce que** les particules du matériau polymère thermoplastique expansé présentent une taille moyenne de 0,05 à 10 cm et en particulier de 0,1 à 1 cm.

6. Elément de construction léger selon l'une des revendications 1 à 5, **caractérisé en ce que** le tissu à plusieurs parois est un tissu à deux parois.

7. Elément de construction léger selon l'une des revendications 1 à 6, **caractérisé en ce que** l'élément est traité de manière à pouvoir être revêtu sur une ou sur deux faces.

8. Elément de construction léger selon l'une des revendications 1 à 7, **caractérisé en ce qu'**il contient des fibres de verre qui conviennent pour le transport de la lumière.

9. Elément de construction léger selon la revendication 8, **caractérisé en ce que** les fibres de verre sont incorporées par tissage et/ou appliquées sur au moins une face de l'élément.

10. Elément de construction léger selon l'une des revendications 1 à 9, **caractérisé en ce qu'**il est revêtu sur au moins une face de cellules solaires, en particulier de cellules solaires CIS.

11. Elément de construction léger selon les revendications 9 ou 10, **caractérisé en ce qu'**une grille de cellules solaires CIS est prévue, des fibres de verre qui conviennent pour le transport de la lumière étant incorporées dans au moins un espace intermédiaire de la grille.

12. Elément de construction léger selon l'une des revendications 1 à 11, **caractérisé en ce qu'**un accumulateur, en particulier un accumulateur au silicium-polymère est appliqué et/ou incorporé par tissage sur au moins une face de l'élément.

13. Elément de construction léger selon l'une des revendications 10 à 12, **caractérisé en ce que** les cellules solaires et/ou l'accumulateur se présentent sous la forme d'une grille ou d'une feuille tramée.

14. Elément de construction léger selon l'une des revendications 10 à 13, **caractérisé en ce qu'**il présente sur une face des cellules solaires et sur la face opposée un accumulateur, les deux faces étant reliées l'une à l'autre par un matériau qui conduit le courant électrique.

15. Elément de construction léger selon l'une des revendications 1 à 14, **caractérisé en ce que** l'élément est scellé à l'aide d'une résine.

16. Elément de construction léger selon l'une des revendications 1 à 15, **caractérisé en ce que** l'élément est scellé à l'aide d'une résine de PVC ou d'une résine époxy.

17. Elément de construction léger selon l'une des revendications 1 à 16, **caractérisé en ce que** l'élément est revêtu ou lamifié sur une ou deux faces d'un mince matériau céramique, métallique ou polymère.

18. Elément de construction léger selon l'une des revendications 1 à 17, **caractérisé en ce que** le tissu textile à plusieurs parois et/ou le fil textile de liaison contiennent des fibres naturelles ou des fibres synthétiques, par exemple des fibres polymères, des fibres de verre, des fibres de carbone, des fibres de céramique, des fibres de bore, des fibres creuses et/ou des fibres métalliques.

19. Elément de construction léger selon l'une des revendications 1 à 18, **caractérisé en ce que** l'élément présente la forme d'une plaque.

20. Procédé pour la fabrication d'un élément de construction léger selon l'une des revendications 1 à 19, **caractérisé par** les étapes qui consistent à :
- introduire un matériau thermoplastique en forme de particules au moins en partie expansées entre les parois d'un tissu à plusieurs parois et
- réticuler les particules les unes avec les autres et/ou avec les fils textiles de liaison et/ou avec les parois du tissu à plusieurs parois par action de la chaleur, ce qui tend les fils textiles de liaison du tissu à plusieurs parois.

21. Procédé selon la revendication 20, **caractérisé en ce que** les surfaces du tissu à plusieurs parois sont tendues avant l'insertion des particules et/ou pendant la réticulation.

22. Procédé selon les revendications 20 ou 21, **caractérisé en ce que** la réticulation s'effectue à l'aide de vapeur chaude.

23. Procédé selon l'une des revendications 21 à 22, **caractérisé en ce qu'**après sa fabrication, l'élément de construction léger est confectionné par découpe, sciage et/ou couture des bords de coupe.
